# EUROPÄISCHE PATENTSCHRIFT

(11) **EP 3 243 015 B1**
(45) Veröffentlichungstag und Bekanntmachung des Hinweises auf die Patenterteilung: **19.02.2020**
(21) Anmeldenummer: 16709733.6
(22) Anmeldetag: 01.03.2016
(51) Int. Cl.: F16H 57/01, G01M 13/021, H04Q 9/00, F03D 17/00, F16H 1/46, F03D 15/00

(54) **MESSSYSTEM UND MESSVERFAHREN ZUR ERFASSUNG VON GRÖSSEN AUF PLANETENTRÄGERN EINES PLANETENGETRIEBES**
MEASURING SYSTEM AND MEASURING METHOD FOR DETECTING VARIABLES ON PLANETARY CARRIERS OF A PLANETARY GEARING
SYSTÈME ET PROCÉDÉ DE MESURE PERMETTANT DE DÉTECTER DES GRANDEURS SUR LES PORTE-SATELLITES D'UN TRAIN PLANÉTAIRE

(30) Priorität: 03.03.2015 DE 102015002619
(43) Veröffentlichungstag der Anmeldung: 15.11.2017
(73) Patentinhaber: Flender GmbH, 46395 Bocholt (DE)
(72) Erfinder: CAMMINADI, Julia, 46145 Oberhausen (DE); DEICKE, Matthias, 31311 Uetze / Schwüblingsen (DE); HASSEL, Jörg, 91058 Erlangen (DE); KECK, Reinhold, 90768 Fürth (DE); KLOS, Hans-Henning, 91249 Weigendorf (DE); VON DOSKY, Stefan, 76149 Karlsruhe (DE)
(74) Vertreter: Maier, Daniel Oliver
(86) Internationale Anmeldenummer: PCT/EP2016/054313
(87) Internationale Veröffentlichungsnummer: WO 2016/139199

(56) Entgegenhaltungen:
- WO-A1-2011/104433
- US-A1- 2008 279 686
- US-A1- 2012 156 034

## Beschreibung

Die Erfindung betrifft ein Messsystem zur Erfassung von Größen auf Planetenträgern eines Planetengetriebes umfassend zumindest mehrere Planetenradstufen, wobei jede Planetenradstufe zumindest jeweils eine Sonnenwelle, zumindest jeweils ein Hohlrad sowie zumindest jeweils ein Planetenrad, das mit der jeweiligen Sonnenwelle und dem jeweiligen Hohlrad durch einen Zahneingriff verbunden ist und jeweils einen zum zumindest einen Planetenrad zugehörigen Planetenträger, der rotationsverbunden mit dem zumindest einen Planetenrad verbunden ist, umfasst.

Planetengetriebe bieten gegenüber herkömmlichen Stirnrad- und Kegelstirnradgetrieben hinsichtlich Leistungsdichte und spezifischem Drehmoment deutliche Vorteile und umfassen eine Sonnenwelle, einen Planetenradträger mit Planetenrädern sowie ein innenverzahntes Hohlrad. Bedingt durch eine zylindrische Grundform der Hohlräder weisen Planetengetriebe für industrielle Anwendungen häufig eine zylindrische Bauform auf. Planetengetriebe können als Aufsteckgetriebe mit einer Drehmomentstütze, als Anschraub- bzw. Anflanschgetriebe oder in Fußaufstellung mit zusätzlichem Gestell montiert werden.

In Getrieben, insbesondere Windkraftgetrieben, stellen Lager eine der häufigsten Ausfallursachen dar. Zur Überwachung und Beurteilung dieser Lager werden verschiedenste Sensoren und Messsysteme eingesetzt.

Bei der Bewertung der von den Sensoren aufgezeichneten Signale ist der Übertragungsweg von der Signalquelle bis zum Sensor von entscheidender Bedeutung.

Bei den verschiedensten Getriebetypen, insbesondere mehrstufige Planetengetriebe, d.h. mit mehr als einer Planetenradstufe, können eine Vielzahl der Lager gemäß dem Stand der Technik nur noch schlecht oder mit hohem Aufwand überwacht werden, da sich diese Lager in einem gegenüber der Umgebung rotierendem Koordinatensystem befinden.

Für die unterschiedlichen Sensortypen und Auswertungen gibt es unterschiedliche Stände der Technik. So werden Druck, Temperatur, Vibrations- / Beschleunigungsmesssensoren in der Regel als "ortsfeste" Sensoren im ruhenden Koordinatensystem angebracht. Es gibt jedoch keine verbundene Möglichkeit die rotierenden Planetenräder der verschiedenen Stufen eines Planetengetriebes rotierend zu überwachen. Insbesondere ist eine rotierende Überwachung der zweiten bzw. dritten oder nachfolgenden Stufen eines Planetengetriebes bisher nicht möglich.

Bei der Bestimmung des Drehmoments werden in der Regel sogenannte "Telemetrie"-Sensoren in dem drehenden Koordinatensystem angebracht. Diese Systeme benötigen jedoch Energie. Die Energieversorgung ist entweder über Schleifringe ausgelegt oder z.B. über eine Batterie. Diese ist jedoch nicht für die Lebensdauer ausgelegt.

Aus der gattungsgemäßen WO 2011/104433 A1 ist ein Überwachungssystem für ein Planetengetriebe bekannt, das eine Basisstation umfasst, die mit einer Antenne verbunden ist. Die Antenne wirkt drahtlos mit Sensoren zusammen, die dazu ausgebildet sind, eine Temperatur oder Vibrationen zu erfassen. Es erfolgt dabei eine drahtlose Übertragung von Daten und Energie zwischen der Antenne und den Sensoren. Die Sensoren können ferner an einem Planetenträger, an einem Lager oder einer Planetenradachse angebracht sein.

Die Druckschrift US 2008/0279686 A1 offenbart ein Getriebe einer Windkraftanlage, das mit einem Sensor ausgerüstet ist. Der Sensor ist dazu ausgebildet, Vibrationen zu erfassen und ist über einen Datensendevorrichtung mit einer Datenverarbeitungseinheit verbunden. Zwischen dem Sensor und der Datenverarbeitungsvorrichtung erfolgen der Datenaustausch und die Energieübertragung drahtlos. Dabei ist der Sensor am Planetenträger befestigt.

Die erste und zweite Aufgabe der Erfindung ist daher die Angabe eines Messsystems zur Planetenradlagerüberwachung sowie eines Messverfahrens, welches sich insbesondere zur Erfassung der Größen der zweiten und darauffolgenden Stufen eines mehrstufigen Planetengetriebes eignet.

Die erste Aufgabe wird gelöst durch die Angabe eines Messsystems zur Erfassung von Größen auf Planetenträgern eines Planetengetriebes, umfassend zumindest mehrere Planetenradstufen, wobei zumindest jede Planetenradstufe jeweils eine Sonnenwelle, zumindest jeweils ein Hohlrad sowie zumindest jeweils ein Planetenrad, das mit der jeweiligen Sonnenwelle und dem jeweiligen Hohlrad durch einen Zahneingriff verbunden ist und jeweils einen zum zumindest einen Planetenrad zugehörigen Planetenträger, der rotationsverbunden mit dem zumindest einen Planetenrad ist, umfasst, wobei zumindest ein erster Sensor, aufweisend zumindest einen Anschluss zur Versorgung des ersten Sensors mit elektrischer Energie, auf zumindest einem der Planetenträger auf zumindest einer der Planetenradstufen zur Erfassung der Größen des zugehörigen Planetenrads angeordnet ist, und wobei das Planetengetriebe eine Elektronik aufweist, durch welche der zumindest eine erste Sensor mit elektrischer Energie versorgbar ist und wobei die zumindest eine Planetenradstufe aus jeder der vorhandenen Planetenradstufen auswählbar ist.

Die zweite Aufgabe wird gelöst durch die Angabe eines Messverfahrens zur Erfassung von Größen auf Planetenträgern eines Planetengetriebes, umfassend zumindest mehrere Planetenradstufen, wobei zumindest jede Planetenradstufe jeweils eine Sonnenwelle, zumindest jeweils ein Hohlrad sowie zumindest jeweils ein Planetenrad, das mit der jeweiligen Sonnenwelle und dem jeweiligen Hohlrad durch einen Zahneingriff verbunden ist und jeweils einen zum zumindest einen Planetenrad zugehörigen Planetenträger, der rotationsverbunden mit dem zumindest einen Planetenrad ist, umfasst, wobei durch zumindest einen auf zumindest einem der Planetenträger auf zumindest einer der Planetenradstufen angebrachten ersten Sensor, welcher zumindest einen Anschluss zur Versorgung des zumindest einen ersten Sensors mit elektrischer Energie aufweist, eine Erfassung der Größen des zugehörigen Planetenrads ermöglicht wird und wobei durch eine Elektronik des Planetengetriebes der zumindest eine erste Sensor mit elektrischer Energie versorgt wird und wobei die zumindest eine Planetenradstufe aus jeder der vorhandenen Planetenradstufen wählbar ist.

Durch die beschriebene Anordnung kann jedes einzelne Lager eines Planetenradgetriebes gemessen werden.

Somit können alle Planetenradstufen erfasst und überwacht werden. Auch die bei schwierigen Umgebungsbedingungen (z.B. Öl, Temperatur, Drehbewegung etc.) messbaren physikalische Größen, wie z.B. Schwingung, Beschleunigung, Temperatur, Öldruck, etc. können hier erfasst werden. Erfindungsgemäß ist somit eine Energieversorgung der Sensorik auf den rotierenden Wellen möglich. Auch eine Datenkommunikation zu den Sensoren ist durch die Energieversorgung möglich.

Insbesondere kann durch die vorgeschlagene Anordnung des Sensors/der Sensoren, falls vorhanden, jedes einzelne Planetenrad im laufenden Betrieb kontinuierlich überwacht werden. Anzeichen von Verschleiß kann durch die Möglichkeit der Erfassung des Öldruckes und der Vibrationen der sich um die Sonnenwelle drehenden Planetenräder am Ort der Verschleißentstehung in der Lagerung erfolgen.

Von besonderer Bedeutung ist dabei die Platzierung der Elektronik. Erfindungsgemäß umfasst die Elektronik eine erste und eine zweite Elektronik. Dabei ist die zweite Elektronik stirnseitig (frontseitig) an der ersten Sonnenwelle der ersten Planetenradstufe angeordnet. Bei großen Windenergieanlagen kann die Zugänglichkeit der Sonnenwelle über die Rotornabe gegeben sein. Daher ist es möglich, die Elektronik (Kundenschnittstelle) an diesem Ort zu erreichen. Dieser Ort ist beispielsweise durch Demontage eines üblicherweise vorhandenen Pitchrohrdeckels im Planetenträger sehr einfach zur erreichen. Damit ist es möglich, die Elektronik im Servicefall und während der Lebenszeit der Anlage einfach zu tauschen.

In den Unteransprüchen sind weitere vorteilhafte Maßnahmen aufgelistet, die beliebig miteinander kombiniert werden können, um weitere Vorteile zu erzielen.

In einer besonders bevorzugten Ausgestaltung versorgt die Elektronik den zumindest einen ersten Sensor kontaktlos bzw. drahtlos mit Energie. Dabei kann die drahtlose Energieversorgung als eine induktive Kopplung, resonant induktive Kopplung oder eine kapazitive Kopplung mit einem Kopplungsfaktor sein.

Bevorzugt umfasst zumindest eine Planetenradstufe mehrere Planetenräder, wobei durch den zumindest einen ersten Sensor eine Überwachung aller Planetenräder bewerkstelligbar ist.

Bevorzugt ist die Elektronik an dem ersten Planetenträger angeordnet, wobei die Sonnenwelle zumindest teilweise als Hohlwelle ausgebildet ist und die Elektronik eine durch diese Hohlwelle geführte erste elektrische Verbindungsleitung aufweist. Bei großen Windenergieanlagen ist hier die Zugänglichkeit über die Sonnenwelle und über die Rotornabe besonders einfach gegeben. Dabei kann die Elektronik ein 25 kHz Transformator sein; die Sekundärspule kann hierbei als eine flexible Leiterplatte ausgestaltet sein. Durch diese Anordnung ist eine Versorgung der Elektronik ohne Aufwand oder Umbau des Getriebes besonders einfach möglich. Die auf anderen Planetenträgern angeordneten Sensoren werden dann kontaktlos bzw. drahtlos mit Energie durch diese Elektronik versorgt. Durch die Kabelanbindung der Elektronik steht dieser für eine solche Übertragung genügend Energie zur Verfügung bzw. diese kann ausreichend mit Energie gespeist werden.

Auch kann weiterhin die erste Planetenradstufe zumindest einen zweiten Sensor aufweisen. Dabei ist eine zweite elektrische Verbindungsleitung von der Elektronik zum zweiten Sensor der ersten Planetenradstufe vorgesehen, zur Versorgung des zweiten Sensors der ersten Planetenradstufe mit Energie. Selbstverständlich kann auch dieser zweite Sensor alternativ dazu drahtlos mit Energie durch die Elektronik versorgt werden.

Bei mehrstufigen Planetengetrieben ist es notwendig auch auf nachfolgenden Stufen, die eine andere Drehzahl haben, rotierende Teile wie den Planetenträger mit Energie zur Sensorversorgung zu erreichen. Über den Planetenträger der ersten Stufe ist es aufgrund der koaxialen Anordnung der weiteren Stufen möglich, eine induktive Energieversorgung (oder anderen Energieversorgung) in z.B. axialer Bauweise, berührungslos aufzubauen. Sollten weitere Planetenradsätze mit anderer Drehzahl existieren, so kann eine Sensorik dort ebenfalls als Subsystem bzgl. Energieversorgung und z.B. zur Übertragung von Messdaten vorgesehen werden.

Bevorzugt ist eine Digitalschnittstelle zur Übertragung der Daten an eine Datenverarbeitungsanlage vorgesehen. In einem weiteren Ausführungsbeispiel ist die Digitalschnittstelle stirnseitig (frontseitig) an dem zumindest einen Planetenträger der ersten Planetenradstufe angeordnet.

Der Zugang zur zweiten Planetenradstufe erfolgt drahtlos bzw. über Funk, sowohl für die Energie als auch die Daten. Dieser Ort ist, wie oben schon beschrieben, durch eine Demontage des Pitchrohrdeckels im Planetenträger einfach zu erreichen. Damit ist es möglich, die Digitalschnittstelle im Servicefall und während der Lebenszeit der Anlage einfach zu tauschen. Für die Übertragung der Daten können die Sensoren mit Antennen ausgestaltet sein.

Bevorzugt ist die Sonnenwelle zumindest teilweise als Hohlwelle ausgebildet, wobei ein Datenübertragungskabel durch diese Hohlwelle zur Digitalschnittstelle geführt werden kann. Somit ist eine sichere und schnelle Datenanbindung ohne eine Änderung oder Anpassung des Aufbaus des Getriebes an eine externe Auswertestation gewährleistet.

Bevorzugt erfolgt die Datenübertragung kontaktlos bzw. drahtlos von dem zumindest einen ersten Sensor an die Digitalschnittstelle. Zumindest der Zugang zur zweiten und ggf. darauffolgenden Planetenradstufe erfolgt drahtlos bzw. über Funk sowohl für die Energie als auch die Daten. Für die Übertragung der Sensordaten von der schnellsten Stufe (Intermediate Speed Stage) bis zum sich nicht bewegenden Datenverarbeitungssystem werden zwei Schnittstellen, eine davon drahtlos, benötigt. Durch eine entsprechende Anordnung von Sensorantennen ist es möglich, dass je Umdrehung nur für ein bestimmtes Intervall Funkkontakt zu einer Antenne besteht. In diesem Intervall werden dann gepuffert Messdaten übertragen. Weiterhin wird ein Zeitstempel übertragen. Sind mehrere Empfangsantennen vorhanden, kann über einen bestimmten Integrationszeitraum die Drehwinkelgeschwindigkeit und später auch der Drehwinkelversatz zwischen bspw. der Intermediate Speed Stage und dem Stator (Getriebegehäuse, Gondel etc.) oder bspw. dem Planetenträger der LSS (Low Speed Stage) und der IMS (Inter Mediate Stage) ermittelt werden. Dieser Versatz ist verursacht durch elastische Wellentorsion und elastische Verformung der Zähne der Zahnräder. Er repräsentiert das aktuelle Drehmoment. Dadurch könnte die Deformation im Getriebe bspw. im Werk einmalig kalibriert werden. Je mehr Antennenpaare, d.h. Sensoren, vorgesehen werden, desto präziser ist der Drehwinkelversatz und damit das Drehmoment ermittelbar.

Bevorzugt weist zumindest die erste Planetenradstufe zumindest einen zweiten Sensor auf. Die Datenübertragung von dem zweiten Sensor an die Digitalschnittstelle erfolgt über ein zweites Datenübertragungskabel. Die Anordnung der Digitalschnittstelle sowie der "Auswerte"-Elektronik erfolgt auf der Frontseite des ersten Planetenträgers, da diese in der Windenergieanlage die Drehgeschwindigkeit der Rotornabe besitzt.

Die Anbindung der Sensoren in der ersten Planetenradstufe erfolgt daher per Draht. Der Zugang zur zweiten Planetenradstufe erfolgt bevorzugt drahtlos bzw. über Funk, sowohl für die Energie als auch für die Daten.

Auch kann die Energieübertragung über eine Kopplung mit einem Kopplungsfaktor erfolgen und die Datenübertragung durch Ausgabe der Modulation des Kopplungsfaktors erfolgen. Damit ist gemeint, dass eine Energieübertragung zwischen zwei Teilen, die im Bezug zueinander rotieren, stattfindet. Diese Energieübertragung kann so gestaltet werden, dass die Energieübertragung vom Rotationswinkel abhängig ist. Diese Abhängigkeit kann auch durch Modulation hergestellt werden, nicht nur durch statische Offsets, so dass sich z.B. die Frequenz oder Phase der Modulation der Kopplung zwischen den beiden Teilen ändert. Somit kann die Drehzahl durch Überwachung der Energieübertragung, die sich in verschiedenen Charakteristika über den Drehwinkel ändern kann, herausgefunden werden. Normalerweise ist nur eine Veränderliche notwendig (Skalarer Energie-Messwert, Frequenz, Phase oder ähnliches), um die Drehzahl zu ermitteln. Der Aufbau, der für die Energieübertragung genutzt wird, wird gleichzeitig auch zum Ermitteln der relativen Drehzahl der beiden Teile zueinander eingesetzt. Mit Koppelfaktor ist hier die elektromagnetische Kopplung der Partner der Energieübertragungsstrecke gemeint. Diese Kopplung kann also nicht nur skalar, sondern auch über eine Umdrehung vektoriell veränderlich sein.

In einer bevorzugten Ausgestaltung kann die Datenübertragung vom dem zumindest ersten Sensor an die Digitalschnittstelle gepuffert erfolgen.

Auch können mehrere Sensoren auf (dem) zumindest einem Planetenträger angeordnet sein. Dies können insbesondere Öldruckmesssensoren, Vibrations- oder Beschleunigungsmesssensoren sein.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1: eine schematische Darstellung eines Planetengetriebes nach dem Stand der Technik,
- FIG 2: eine erste mögliche Lage der erfindungsgemäßen rotierenden Sensoren,
- FIG 3: Pfade der elektrischen Energieversorgung und der Messdatenübertragung für das obige Ausführungsbeispiel.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden ohne den Schutzumfang der Erfindung, wie er durch die nachfolgenden Patentansprüche definiert wird, zu verlassen.

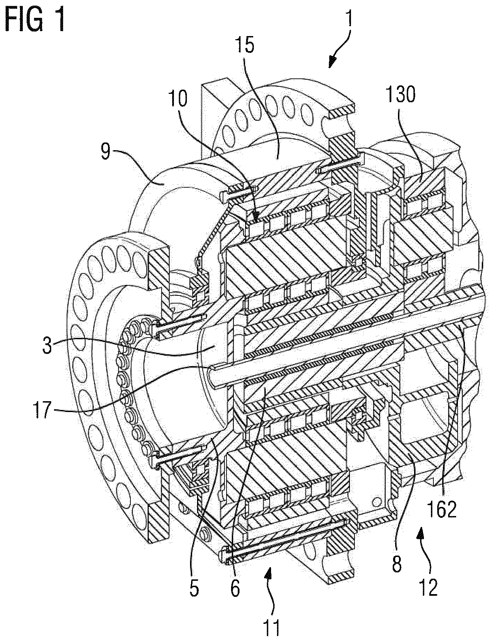

Fig. 1 zeigt einen Schnitt eines 2-stufigen Planetengetriebes 1 zum Einsatz in einer Windkraftanlage, umfassend eine erste, antriebsseitige Planetenradstufe 11 und eine zweite, abtriebsseitige Planetenradstufe 12. Die Abtriebswelle des Getriebes 1 ist mit einem Generator gekoppelt. Die Sonnenwelle 6 der ersten Planetenradstufe 11 ist drehstarr mit dem Planetenträger 8 der zweiten Planetenradstufe 12 gekoppelt.

In dem Planetengetriebe 1 gibt es mehrere rotierende Koordinatensysteme:
a) Ein Getriebegehäuse 9 und das Hohlrad 15 bilden ein erstes, relativ zur Gondel feststehendes Koordinatensystem.
b) Der erste Planetenträger 5 der ersten Planetenradstufe 11 und die erste Sonnenwelle 6 bilden ein erstes rotierendes Koordinatensystem, rotierend mit einer Geschwindigkeit.
c) In dem Planetenträger 5 lagern Planetenräder 10, die mit der Sonnenwelle 6 und dem Hohlrad 15 in Eingriff stehen. Die Sonnenwelle 6 des ersten Planetenträgers 5 ist drehstarr verbunden mit dem zweiten Planetenträger 8.
d) Die Sonnenwelle 162 der zweiten Planetenradstufe 12 ist drehstarr verbunden mit dem Generator oder einer weiteren Getriebestufe. Die Planetenräder 10 der ersten Planetenradstufe 11 und die Planetenräder 130 der zweiten Planetenradstufe 12 bilden weitere rotierende Koordinatensysteme.
e) Zudem ist ein Pitchrohr 17 als auch ein Pitchrohrdeckel 3 vorgesehen.

Die Überwachung von Betriebsparametern im Getriebe, wie z.B. Temperatur von Lagern (z.B. mithilfe von PT100-Elementen), Schwingungen (Schwingungsüberwachung mit Beschleunigungsmesssensoren, z.B. basierend auf dem Piezo-Effekt), Öldruck in den Ölzuführungsleitungen, die zur Schmierung von rotierenden Bauteilen vorgesehen sind, Ölpegel, etc., bereitet Schwierigkeiten, da eine kabelgebundene Verbindung zwischen den Sensoren und einer Empfangseinheit im Koordinatensystem der Gondel aufgrund der vielen unterschiedlichen rotierenden Koordinatensysteme nur für wenige Sensoren möglich ist.

Es gibt jedoch keine Möglichkeiten, rotierende Planetenräder 10 der verschiedenen Stufen eines solchen Planetengetriebes 1 zu überwachen. Insbesondere ist es von Vorteil, diese z.B. mit einem Öldruckmesssensor zu überwachen, um zu wissen, wie viel Öl tatsächlich den Planetenradlagern zugeführt wird. Somit kann Verschleiß verringert und die Lebensdauer erhöht werden.

Die vorliegende Erfindung ermöglicht die einfache Erfassung von Größen und Überwachung von mehrstufigen Planetengetrieben 1 mit Sensoren, die einen erhöhen Energiebedarf haben und eine erhöhte Bandbreite zur Datenübermittlung benötigen.

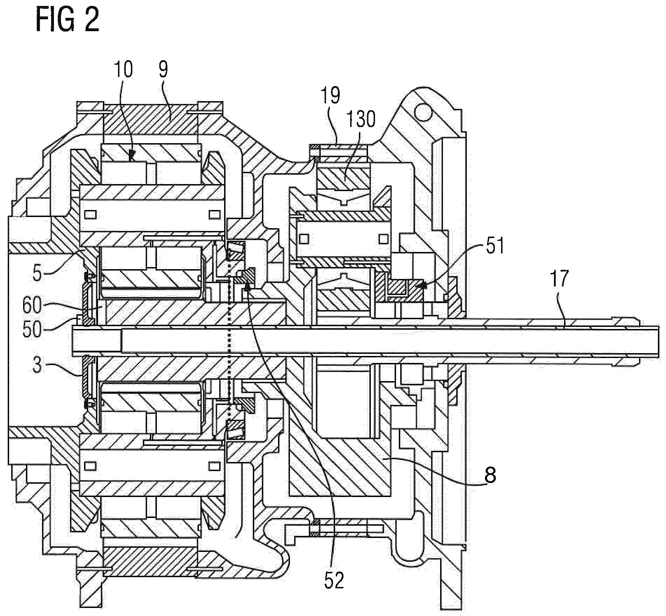

FIG 2 zeigt die Erfindung im Detail. Durch die Erfindung wird ein Betreiben von Sensoren auf den Planetenträger mittels einer Elektronik erreicht. Es werden Sensoren auf den Planetenträger 5 der ersten Stufe 11 (FIG 1) und dem Planetenträger 8 der zweiten Stufe 12 (FIG 1)angeordnet. Insbesondere kann durch die erfindungsgemäße Anordnung der Sensoren jedes einzelne Planetenrad 10 der ersten Stufe 11 (FIG 1) sowie der nachfolgenden Stufen 12 (FIG 1) etc. im laufenden Betrieb kontinuierlich überwacht werden. Eine Verschleißerfassung kann durch eine Erfassung des Öldruckes und/oder der Vibrationen, der sich um die Sonnenwelle 6 drehenden Planetenräder 10, d.h. direkt am Ort der Verschleißentstehung, erfolgen. Die Elektronik versorgt den einen Sensor oder mehrere Sensoren drahtlos bzw. kontaktlos mit Energie. Dabei ist es möglich, dass die Sensoren der ersten Planetenradstufe 11 (FIG 1) noch mit einem Kabel an die Elektronik angebunden sind und die Versorgung der Sensoren auf den weiteren Planetenradstufen 12 (FIG 1) drahtlos bzw. kontaktlos erfolgt. Die Elektronik der Sensoren in der ersten Planetenradstufe 11 (FIG 1) kann per Draht erfolgen. Dabei kann die Elektronik aus einer ersten Elektronik 50, z.B. einer Kundenschnittstelle im ersten Koordinatensystem, und einer zweiten Elektronik 60, z.B. einer Sende- und Empfangseinheit für die Sensoren bestehen. Diese ist im zweiten Koordinatensystem angeordnet. Die Kundenschnittstelle ist dabei auf dem Planetenträger 5 angeordnet.

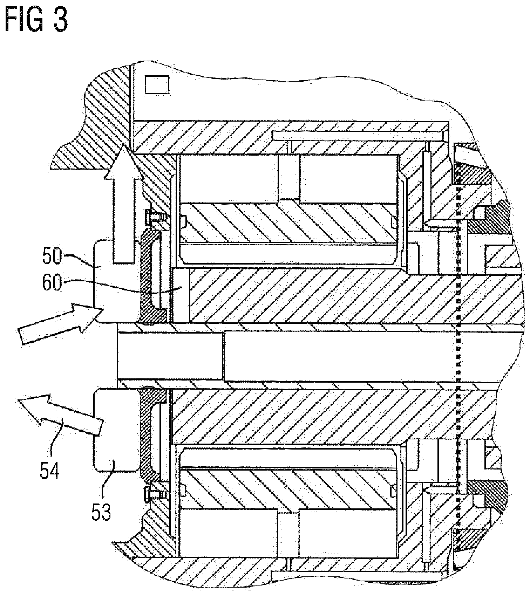

Zudem ist eine Digitalschnittstelle 53 (FIG 3) vorgesehen, welche Daten über eine drahtlose Verbindung von dem einen oder mehreren Sensoren erhält, wobei einer oder mehrere Sensoren in dem zweiten oder darauffolgender rotierender Planetenradstufe 12 (FIG 1) angeordnet sein können.

Die Anordnung einer Digitalschnittstelle 53 (FIG 3) sowie der ersten Elektronik 50 erfolgt an dem Planetenträger 5, da diese in der Energieerzeugungsanlage die Drehgeschwindigkeit der Rotornabe besitzt.

Der Zugang zur zweiten Planetenradstufe 12 (FIG 1) erfolgt drahtlos bzw. über Funk sowohl für die Energie als auch die Daten. Bei z.B. großen Windenergieanlagen ist die Zugänglichkeit der Sonnenwelle 6 über die Rotornabe gegeben. Daher ist es möglich, die Elektronik an diesem Ort zu erreichen.

Auch ist die Funk-Elektronik über diesen Weg erreichbar, da sie gemäß Erfindung auf der Stirnseite der Sonnenwelle 6 (FIG 1) der ersten Planetenradstufe 11 (FIG 1) montiert ist. Dieser Ort ist durch Demontage des Pitchrohrdeckels 3 im Planetenträger 5 einfach zu erreichen. Damit ist es möglich, die Elektronik im Servicefall und während der Lebenszeit der Anlage, z.B. Windenergieanlage, einfach zu tauschen.

Zum Beispiel kann die Energie, z.B. eine 25 kHz-Verbindung, über eine induktive oder kapazitive Kopplung, übertragen werden.

Zusätzlich können von den Sensoren stammende Daten über eine 2,4 GHz Funkverbindung übertragen werden. Auch können diese Daten nicht nur über Funk, sondern auch über eine Modulation des Kopplungsfaktors ausgeben werden.

Weiterhin wäre auch ein RFID-basiertes (Radio Frequency Identification) bzw. SAW-basiertes (Surface Acoustic Wave) Sensormodul denkbar. Die Energieversorgung bzw. das Abfragesignal des Moduls erfolgt in diesem Fall durch den RFID/SAW-Reader und dessen Antenne, die ebenfalls die Messdatenübertragung ermöglicht. Wegen des vergleichsweise geringen Aufwandes an Hardware sind solche Module vorteilhaft und preiswert.

Eine einfache, direkte Überwachung der Planetenradlager sowie die Generierung von Zusatzinformation (z.B. Öl-Druck im Planetenträger) wird erstmalig möglich.

Der Planetenträger 5 dreht sich langsam mit den Rotorblättern. Durch das in einer Windenergieanlage im Allgemeinen vorhandene Pitchrohr 17 können die notwendigen Leitungen (Energieversorgung, Sensordaten, etc.) dann generatorseitig, zum Beispiel durch Schleifringe oder WLAN, abgegriffen werden. Eine Rotornabe ist systembedingt immer mit Energie und Daten versorgt, da die Pitchrohrantriebe zur Verstellung der Blätter dieses fordern. Zusätzlich kann die Elektronik durch den vorhandenen Wartungseinstieg einem Austausch bzw. einer Wartung unterzogen werden.

Bei mehrstufigen Planetengetrieben 1 (FIG 1) ist es notwendig auch auf nachfolgenden Stufen 12 (FIG 1) etc., die eine andere Drehzahl haben, rotierende Teile, wie den Planetenträger 8 (FIG 1), mit Energie zur Sensorversorgung zu erreichen.

Über den Planetenträger 5 der ersten Stufe 11 (FIG 1) ist es aufgrund der koaxialen Anordnung der weiteren Stufen 12 (FIG 1) möglich, eine induktive Energieversorgung (Stromversorgungvorrichtung 50), hier in axialer Bauweise, berührungslos aufzubauen. Bei weiteren Planetenrädern mit anderer Drehzahl kann eine Sensorik, hier als Ölmesssensor 51 und Beschleunigungssensor 52 ausgebildet, ebenfalls als Subsystem bzgl. Energieversorgung und Übertragung der Messdaten vorgesehen werden. Durch die beschriebene Anordnung kann jedes einzelne Lager eines Planetenradgetriebes gemessen werden.

In der Getriebetechnik ist es weiterhin oftmals von Interesse, das übertragene Drehmoment zu bestimmen, welches von den Sensoren gemessen werden kann.

FIG 3 zeigt die Übertragung der Sensordaten. Von der schnellsten Stufe (intermediate speed stage) bis zur sich nicht bewegenden Digitalschnittstelle 53 wird eine drahtlose Schnittstelle benötigt. Durch eine entsprechende Anordnung der Antennen ist es möglich, dass je Umdrehung nur für ein bestimmtes Intervall Funkkontakt zu einer Antenne besteht.

In FIG 3 wird diese drahtlose Messdatenübertragung von der Intermediate Stage an die Digitalschnittstelle 53 durch einen Pfeil 54 gezeigt. Die Digitalschnittstelle 53, welche an der ersten Stufe (nachfolgend auch als low speed stage bezeichnet) angeordnet ist, wird mit einem Datenübertragungskabel (nicht gezeigt) an eine externe Datenverarbeitungsanlage (nicht gezeigt) angebunden. Die Sensoren sind an eine zweite Elektronik 60 im zweiten Koordinatensystem angeschlossen. Die zweite Elektronik 60 ist mit Antennen als Sende- und Empfangseinheit für Daten und Energie ausgeführt. Durch Funk werden die Messdaten an die Digitalschnittstelle 53 gepuffert übertragen. Durch eine entsprechende Anordnung der Antennen ist es möglich, dass je Umdrehung nur für ein bestimmtes Intervall Funkkontakt zu einer Antenne besteht. In diesem Intervall werden dann die gepufferten Messdaten übertragen. Weiterhin wird ein Zeitstempel übertragen. Sind mehrere Empfangsantennen vorhanden, können über einen bestimmten Integrationszeitraum die Drehwinkelgeschwindigkeit und später auch der Drehwinkelversatz zwischen bspw. erster und zweiter Stufe ermittelt werden. Dieser Versatz wird durch elastische Wellentorsion und elastische Verformung der Zähne der Zahnräder verursacht. Er repräsentiert das aktuelle Drehmoment. Je mehr Sensoren bzw. Antennenpaare vorgesehen sind, desto präziser ist das Drehmoment ermittelbar.

In der Figur ist ein Aufbau der berührungslosen Energieversorgung in axialer Bauweise gezeigt. Selbstverständlich ist ein Aufbau der berührungslosen Energieversorgung in radialer Bauweise an dem Planetenträger der nachfolgenden Planetenradstufen auch möglich.

Die Überwachung von Betriebsparametern im Getriebe wie z.B. Temperatur von Lagern (z.B. mithilfe von PT100-Elementen), Schwingungen (Schwingungsüberwachung mit Beschleunigungsmesssensoren, z.B. basierend auf dem Piezo-Effekt), Öldruck in den Ölzuführungsleitungen, die zur Schmierung von rotierenden Bauteilen vorgesehen sind, Ölpegel, etc., bereitet Schwierigkeiten, da eine kabelgebundene Verbindung zwischen den Sensoren und einer Empfangseinheit im Koordinatensystem der Gondel aufgrund der vielen unterschiedlichen rotierenden Koordinatensysteme nur für wenige Sensoren möglich ist. Sensoren, die in einem der rotierenden Koordinatensysteme angeordnet sind, müssen über eine drahtlose Verbindung mit einer Empfangseinheit im Koordinatensystem der Gondel verbunden werden.

Durch die Erfindung ist es möglich, messbare physikalische Größen (z.B. Schwingung, Beschleunigung, Temperatur, Öldruck, etc.) jeder Stufe eines Planetengetriebes bei schwierigen Umgebungsbedingungen (z.B. Öl, Temperatur, Drehbewegung. etc.) zu messen. Durch die Erfindung ist nämlich nun eine Energieversorgung der Sensorik auf den rotierenden Wellen als auch eine Kommunikationsanbindung der Sensoren auf jeder Planetenradstufe möglich.

Der Vorteil liegt darin, dass es erstmals möglich ist, Sensorsignale von allen "rotierenden" Planetenradstufen über die Lebensdauer zu bekommen. Dieses ist durch die Erfindung und die damit gegebene Service-Möglichkeit erreicht. Erfindungsgemäß überträgt eine Elektronik drahtlos bzw. kontaktlos Energie zu einem oder mehreren Sensoren. Daten werden ebenfalls über eine drahtlose Verbindung von den einen oder mehreren Sensoren an eine Digitalschnittstelle 53 übertragen, wobei die einen oder mehreren Sensoren in dem zweiten rotierenden Koordinatensystem angeordnet sind.

Erfindungsgemäß wird eine Funk-Energieübertragung am rotierenden Teil für die Drehzahlermittlung und die drehzahlabhängige Abtastrate (Samplerate) genutzt. Es erfolgt eine ortsabhängige Energieübertragung durch eine Kopplung (Koppelfaktor) bei Rotation im Getriebe für das Drehzahlsignal im rotierenden Teil. Das Drehzahlsignal wird nach außen gegeben und kann von Sensoren für eine Datenaufnahme verwendet werden. Die Informationen können per Funk oder über Modulation des Koppelfaktors ausgegeben werden.

Dadurch ist es erstmals möglich, Sensorsignale von den "rotierenden" Planetenradstufen über die Lebensdauer zu bekommen.

## Patentansprüche

1. Messsystem zur Erfassung von Größen auf Planetenträgern eines Planetengetriebes (1) umfassend zumindest mehrere Planetenradstufen (11,12), wobei zumindest jede Planetenradstufe (11,12) jeweils eine Sonnenwelle (6,162), zumindest jeweils ein Hohlrad (15,19) sowie zumindest jeweils ein Planetenrad (10,130), das mit der jeweiligen Sonnenwelle (6, 162) und dem jeweiligen Hohlrad (15,19) durch einen Zahneingriff verbunden ist, und jeweils einen zum zumindest einen Planetenrad (10,130) zugehörigen Planetenträger (5,8), der rotationsverbunden mit dem zumindest einen Planetenrad (10,130) ist, umfasst, wobei zumindest ein erster Sensor, aufweisend zumindest einen Anschluss zur Versorgung des ersten Sensors mit elektrischer Energie, auf zumindest einem der Planetenträger (5,8) auf zumindest einer der Planetenradstufen (11,12) zur Erfassung der Größen des zugehörigen Planetenrads (10,130) angeordnet ist, und wobei das Planetengetriebe (1) eine Elektronik aufweist, durch welche der zumindest eine erste Sensor mit elektrischer Energie versorgbar ist und wobei die zumindest eine Planetenradstufe (11,12) aus jeder der vorhandenen Planetenradstufen (11,12) auswählbar ist,
**dadurch gekennzeichnet, dass** die Elektronik eine erste Elektronik (50) und eine zweite Elektronik (60) umfasst, die erste Elektronik (50) auf dem ersten Planetenträger (5) einer ersten Planetenstufe (11) angeordnet ist und die zweite Elektronik stirnseitig an der ersten Sonnenwelle (6) der ersten Planetenradstufe (11) angeordnet ist.

2. Messsystem nach Anspruch 1,
**dadurch gekennzeichnet, dass** die Elektronik kontaktlos bzw. drahtlos den zumindest einen ersten Sensor mit Energie versorgt.

3. Messsystem nach Anspruch 1 oder 2,
**dadurch gekennzeichnet, dass** die zumindest eine Planetenradstufe (11,12) mehrere Planetenräder umfasst und durch den zumindest einen ersten Sensor eine Überwachung aller Planetenräder bewerkstelligbar ist.

4. Messsystem nach einem der vorhergehenden Ansprüche,
**dadurch gekennzeichnet, dass** mehrere Sensoren vorgesehen sind und die Elektronik zumindest diejenigen Sensoren, die nicht auf dem ersten Planetenträger (5) der ersten Planetenradstufe (11) angeordnet sind, kontaktlos bzw. drahtlos mit Energie versorgt.

5. Messsystem nach einem der vorhergehenden Ansprüche 4,
**dadurch gekennzeichnet, dass** zumindest die erste Planetenradstufe (11) zumindest einen zweiten Sensor aufweist, wobei eine zweite elektrische Verbindungsleitung von der Elektronik zum zweiten Sensor der ersten Planetenradstufe (11) vorgesehen ist, zur Versorgung des zweiten Sensors der ersten Planetenradstufe (11) mit Energie.

6. Messsystem nach einem der Ansprüche 1 bis 5,
**dadurch gekennzeichnet, dass** die erste Sonnenwelle (6) der ersten Planetenstufe (11) zumindest teilweise als Hohlwelle ausgebildet ist und die zweite Elektronik (60) eine durch diese Hohlwelle geführte erste elektrische Verbindungsleitung aufweist.

7. Messsystem nach einem der vorhergehenden Ansprüche,
**dadurch gekennzeichnet, dass** eine Digitalschnittstelle (53) zur Übertragung der Daten an eine Datenverarbeitungsanlage vorgesehen ist.

8. Messsystem nach Anspruch 7,
**dadurch gekennzeichnet, dass** die Digitalschnittstelle (53) stirnseitig an dem ersten Planetenträger (5) der ersten Planetenradstufe (11) angeordnet ist.

9. Messsystem nach einem der vorhergehenden Ansprüche 7 oder 8,
**dadurch gekennzeichnet, dass** die Datenübertragung kontaktlos bzw. drahtlos von dem zumindest einen ersten Sensor an die Digitalschnittstelle (53) erfolgt.

10. Messsystem nach einem der vorhergehenden Ansprüche 7-9, wenn abhängig vom Anspruch 5, **dadurch gekennzeichnet, dass** zumindest die erste Planetenradstufe (11) am ersten Planetenträger (5) den zweiten Sensor aufweist und die Datenübertragung von dem zweiten Sensor an die Digitalschnittstelle (53) über ein zweites Datenübertragungskabel erfolgt.

11. Messsystem nach Anspruch 9,
**dadurch gekennzeichnet, dass** die drahtlose Datenübertragung mittels Funk oder Optik erfolgt.

12. Messsystem nach einem der vorhergehenden Ansprüche 9 oder 11,
**dadurch gekennzeichnet, dass** die Energieübertragung über eine Kopplung mit einem Kopplungsfaktor erfolgt und die drahtlose Datenübertragung durch Ausgabe der Modulation des Kopplungsfaktors erfolgt.

13. Messsystem nach einem der vorhergehenden Ansprüche 7-12,
**dadurch gekennzeichnet, dass** die Datenübertragung vom dem zumindest einen ersten Sensor an die Digitalschnittstelle (53) gepuffert erfolgt.

14. Messsystem nach einem der vorhergehenden Ansprüche,
**dadurch gekennzeichnet, dass** mehrere Sensoren auf dem zumindest einen Planetenträger (5,8) angeordnet sind.

15. Messverfahren zur Erfassung von Größen auf Planetenträgern eines Planetengetriebes (1), umfassend zumindest mehrere Planetenradstufen (11,12), wobei zumindest jede Planetenradstufe (11,12) jeweils eine Sonnenwelle (6,162), zumindest jeweils ein Hohlrad (15,19) sowie zumindest jeweils ein Planetenrad (10,130), das mit der jeweiligen Sonnenwelle (6, 162) und dem jeweiligen Hohlrad (15,19) durch einen Zahneingriff verbunden ist, und jeweils einen zum zumindest einen Planetenrad (10,130) zugehörigen Planetenträger (5,8), der rotationsverbunden mit dem zumindest einen Planetenrad (10,130) ist, umfasst, wobei durch zumindest einen auf zumindest einem der Planetenträger auf zumindest einer der Planetenradstufen (11,12) angebrachten ersten Sensor, welcher zumindest einen Anschluss zur Versorgung des ersten Sensors mit elektrischer Energie aufweist, eine Erfassung von Größen des zugehörigen Planetenrads (10,130) ermöglicht wird, und wobei durch eine Elektronik des Planetengetriebes (1) der zumindest eine erste Sensor mit elektrischer Energie versorgt wird und wobei die zumindest eine Planetenradstufe (11,12) aus jeder der vorhandenen Planetenradstufen (11,12) wählbar ist,
wobei die elektrische Energie drahtlos übertragen wird, und die drahtlose Energieübertragung durch eine kapazitive Kopplung oder eine induktive Kopplung mit einem Kopplungsfaktor übertragen wird, **dadurch gekennzeichnet, dass** eine Übertragung von Sensordaten über eine Digitalschnittstelle (53) und die Datenübertragung über Modulation des Kopplungsfaktors erfolgt.

16. Messverfahren nach Anspruch 15, welches mit einem Messsystem nach einem der obigen Ansprüche 1-14 durchgeführt wird.

## Claims

1. Measuring system for detecting variables on planet carriers of a planetary gear train (1) comprising at least multiple planetary gear stages (11, 12), wherein at least each planetary gear stage (11, 12) comprises a respective sun shaft (6, 162), at least one respective ring gear (15, 19), and also at least one respective planet gear (10, 130) which is connected to the respective sun shaft (6, 162) and the respective ring gear (15, 19) by a toothed engagement, and a respective planet carrier (5, 8) which is assigned to the at least one planet gear (10, 130) and is rotationally connected to the at least one planet gear (10,130), wherein at least one first sensor, having at least one connection for supplying the first sensor with electrical energy, is arranged on at least one of the planet carriers (5, 8) on at least one of the planetary gear stages (11, 12) for detecting the variables of the assigned planet gear (10, 130), and wherein the planetary gear train (1) has electronics by means of which the at least one first sensor can be supplied with electrical energy and wherein the at least one planetary gear stage (11, 12) is selectable from each of the available planetary gear stages (11, 12),
**characterised in that** the electronics comprises a first electronics facility (50) and a second electronics facility (60), the first electronics facility (50) is arranged on the first planet carrier (5) of a first planetary stage (11) and the second electronics facility is arranged on the face side of the first sun shaft (6) of the first planetary gear stage (11).

2. Measuring system according to claim 1,
**characterised in that** the electronics supplies the at least one first sensor with energy contactlessly or wirelessly respectively.

3. Measuring system according to claim 1 or 2,
**characterised in that** the at least one planetary gear stage (11, 12) comprises multiple planet gears and monitoring of all the planet gears can be accomplished by means of the at least one first sensor.

4. Measuring system according to one of the preceding claims,
**characterised in that** multiple sensors are provided and the electronics supplies at least those sensors which are not arranged on the first planet carrier (5) of the first planetary gear stage (11) with energy contactlessly or wirelessly respectively.

5. Measuring system according to the preceding claim 4,
**characterised in that** at least the first planetary gear stage (11) has at least one second sensor, wherein a second electrical connecting lead is provided from the electronics to the second sensor of the first planetary gear stage (11) for supplying the second sensor of the first planetary gear stage (11) with energy.

6. Measuring system according to one of claims 1 to 5,
**characterised in that** the first sun shaft (6) of the first planetary stage (11) is realised at least partly in the form of a hollow shaft and the second electronics facility (60) has a first electrical connecting lead routed through the said hollow shaft.

7. Measuring system according to one of the preceding claims,
**characterised in that** a digital interface (53) is provided for transmitting the data to a data processing system.

8. Measuring system according to claim 7,
**characterised in that** the digital interface (53) is arranged on the face side of the at least one planet carrier (5) of the first planetary gear stage (11).

9. Measuring system according to one of the preceding claims 7 or 8,
**characterised in that** the data transmission is effected contactlessly or wirelessly respectively from the at least one first sensor to the digital interface (53).

10. Measuring system according to one of the preceding claims 7-9, where dependent upon claim 5,
**characterised in that** at least the first planetary gear stage (11) on the first planet carrier (5) has the second sensor and the data transmission from the second sensor to the digital interface (53) is effected via a second data transmission cable.

11. Measuring system according to claim 9,
**characterised in that** the wireless data transmission is effected by using radio or optics.

12. Measuring system according to one of the preceding claims 9 or 11,
**characterised in that** the energy transmission is effected via a coupling with a coupling factor and the wireless data transmission is effected by outputting the modulation of the coupling factor.

13. Measuring system according to one of the preceding claims 7-12,
**characterised in that** the data transmission from the at least one first sensor to the digital interface (53) is effected with buffering.

14. Measuring system according to one of the preceding claims,
**characterised in that** multiple sensors are arranged on the at least one planet carrier (5, 8) .

15. Measuring method for detecting variables on planet carriers of a planetary gear train (1) comprising at least multiple planetary gear stages (11, 12), wherein at least each planetary gear stage (11, 12) comprises a respective sun shaft (6, 162), at least one respective ring gear (15, 19), and also at least one respective planet gear (10, 130) which is connected to the respective sun shaft (6, 162) and the respective ring gear (15, 19) by a toothed engagement, and a respective planet carrier (5, 8) which is assigned to the at least one planet gear (10, 130) and is rotationally connected to the at least one planet gear (10, 130), wherein a detection of variables of the assigned planet gear (10, 130) is enabled by at least one first sensor mounted on at least one of the planet carriers on at least one of the planetary gear stages (11, 12), which first sensor has at least one connection for supplying the first sensor with electrical energy, and wherein the at least one first sensor is supplied with electrical energy by means of electronics of the planetary gear train (1), and wherein the at least one planetary gear stage (11, 12) is selectable from each of the available planetary gear stages (11, 12),
wherein the electrical energy is transmitted wirelessly and the wireless energy transmission is transmitted by means of a capacitive coupling or an inductive coupling with a coupling factor,
**characterised in that** a transmission of sensor data is effected via a digital interface (53) and the data transmission is effected via modulation of the coupling factor.

16. Measuring method according to claim 15, which is carried out with a measuring system according to one of the above claims 1-14.

## Revendications

1. Système de mesure pour détecter des grandeurs sur des porte-satellites d'un train (1) planétaire, comprenant au moins plusieurs étages (11, 12) de roue satellite, dans lequel au moins chaque étage (11, 12) de roue satellite comprend, respectivement, au moins une roue (6, 162) solaire, au moins, respectivement, une roue (15, 19) à denture intérieure, ainsi qu'au moins, respectivement, une roue (10, 130) satellite, qui est reliée à la roue (6, 162) solaire respective et à la roue (15, 19) à denture intérieure respective par un engrènement de dents et, respectivement, un porte-satellite (5, 8), qui est associé à la au moins une roue (10, 130) satellite et qui est solidaire en rotation de la au moins une roue (10, 130) satellite, dans lequel au moins un premier capteur, ayant au moins une borne d'alimentation du premier capteur en énergie électrique, est, pour la détection des grandeurs de la roue (10, 130) planétaire associée, monté sur au moins l'un des porte-satellites (5, 8) sur au moins l'un des étages (11, 12) de roue satellite et dans lequel le train (1) planétaire a une électronique, par laquelle le au moins un premier capteur peut être alimenté en énergie électrique, et dans lequel le au moins un étage (11, 12) de roue satellite peut être choisi parmi chacun des étages (11, 12) de roue satellite présents,
**caractérisé en ce que** l'électronique comprend une première électronique (50) et une deuxième électronique (60), la première électronique (50) étant disposée sur le premier porte-satellite (5) d'un premier étage (11) satellite et la deuxième électronique étant disposée du côté frontal sur la première roue (6) solaire du premier étage (11) de roue satellite.

2. Système de mesure suivant la revendication 1,
**caractérisé en ce que**
l'électronique alimente en énergie le au moins un premier capteur sans contact ou sans fil.

3. Système de mesure suivant la revendication 1 ou 2,
**caractérisé en ce que**
le au moins un étage (11, 12) de roue satellite comprend plusieurs roues satellites et il peut être réalisé, par le au moins un premier capteur, un contrôle de toutes les roues satellites.

4. Système de mesure suivant l'une des revendications précédentes,
**caractérisé en ce qu'**
il est prévu plusieurs capteurs et l'électronique alimente en énergie, sans contact ou sans fil, au moins les capteurs, qui ne sont pas disposés sur le premier porte-satellite (5) du premier étage (11) de roue satellite.

5. Système de mesure suivant l'une des revendications précédentes 4,
**caractérisé en ce qu'**
au moins le premier étage (11) de roue satellite a au moins un deuxième capteur, une deuxième ligne électrique de liaison est prévue de l'électronique au deuxième capteur du premier étage (11) de roue satellite pour alimenter en énergie le deuxième capteur du premier étage (11) de roue satellite.

6. Système de mesure suivant l'une des revendications 1 à 5,
**caractérisé en ce que**
la première roue (6) solaire du premier étage (11) satellite est constituée, au moins en partie, sous la forme d'un arbre creux et la deuxième électronique (60) a une première ligne électrique de liaison passant dans cet arbre creux.

7. Système de mesure suivant l'une des revendications précédentes,
**caractérisé en ce qu'**
il est prévu une interface (53) numérique pour la transmission des données à une installation de traitement de données.

8. Système de mesure suivant la revendication 7,
**caractérisé en ce que**
l'interface numérique est montée du côté frontal sur le premier porte-satellite (5) du premier étage (11) de roue satellite.

9. Système de mesure suivant l'une des revendications 7 ou 8,
caractérisé en que
la transmission de données s'effectue sans contact ou sans fil du au moins un premier capteur à l'interface (53) numérique.

10. Système de mesure suivant l'une des revendications précédentes lorsqu'elle dépend de la revendication 5,
**caractérisé en ce qu'**
au moins le premier étage (11) de roue satellite a, sur le premier porte-satellite, le deuxième capteur et la transmission de données du deuxième capteur à l'interface (53) numérique s'effectue par un deuxième câble de transmission de données.

11. Système de mesure suivant la revendication 9,
**caractérisé en ce que**
la transmission de données sans fil s'effectue au moyen de la radio ou de manière optique.

12. Système de mesure suivant l'une des revendications 9 ou 11 précédentes,
**caractérisé en ce que**
la transmission d'énergie s'effectue par un couplage ayant un facteur de couplage et la transmission de données sans fil s'effectue par émission de la modulation du facteur de couplage.

13. Système de mesure suivant l'une des revendications 7 à 12 précédentes,
**caractérisé en ce que**
la transmission de données s'effectue de manière tamponnée du au moins un premier capteur à l'interface (53) numérique.

14. Système de mesure suivant l'une des revendications précédentes,
**caractérisé en ce que**
plusieurs capteurs sont montés sur le au moins un porte-satellite (5, 8).

15. Procédé de mesure pour détecter des grandeurs sur des porte-satellites d'un train (1) planétaire, comprenant au moins plusieurs étages (11, 12) de roue satellite, dans lequel au moins chaque étage (11, 12) de roue satellite comprend, respectivement, au moins une roue (6, 162) solaire, au moins, respectivement, une roue (15, 19) à denture intérieure, ainsi qu'au moins, respectivement, une roue (10, 130) satellite, qui est reliée à la roue (6, 162) solaire respective et à la roue (15, 19) à denture intérieure respective par un engrènement de dents et, respectivement, un porte-satellite (5, 8), qui est associé à la au moins une roue (10, 130) satellite et qui est solidaire en rotation de la au moins une roue (10, 130) satellite, dans lequel on rend possible, par au moins un premier capteur mis sur au moins l'un des porte-satellites sur au moins l'un des étages (11, 12) de roue satellite et qui a au moins une borne d'alimentation de premier capteur en énergie électrique, une détection de grandeurs de la roue (10, 130) satellite associée et dans lequel, par une électronique du train (11) planétaire, on alimente le au moins un premier capteur en énergie électrique et dans lequel le au moins un étage (11, 12) de roue satellite peut être choisi dans chacun des étages (11, 12) de roue satellite présent,
dans lequel on transmet l'énergie électrique sans fil et la transmission d'énergie sans fil par un couplage capacitif ou par un couplage inductif en ayant un facteur de couplage,
**caractérisé en ce qu'**une transmission de données de capteurs s'effectue par une interface (53) numérique et la transmission de données s'effectue par modulation du facteur de couplage.

16. Procédé de mesure suivant la revendication 15, que l'on effectue par un système de mesure suivant l'une des revendications 1 à 14 précédentes.
